# EUROPEAN PATENT SPECIFICATION

(11) **EP 2 371 603 B1**
(45) Date of publication and mention of the grant of the patent: **28.11.2012**
(21) Application number: 11158520.4
(22) Date of filing: 16.03.2011
(51) Int. Cl.: B60K 11/08, F01P 7/10

(54) **Movable grille shutter for vehicle**
Bewegliche Grillblendenvorrichtung für ein Fahrzeug
Obturateur de calandre amovible pour véhicule

(30) Priority: 25.03.2010 JP 2010070953
(43) Date of publication of application: 05.10.2011
(73) Proprietor: AISIN SEIKI KABUSHIKI KAISHA, Kariya-shi, Aichi-ken 448-8650 (JP)
(72) Inventor: Hori, Kenji c/o AISIN SEIKI KABUSHIKI KAISHA, Kariya-shi, Aichi-ken, 448-8650 (JP); Asano, Yoshimasa c/o AISIN SEIKI KABUSHIKI KAISHA, Kariya-shi, Aichi-ken, 448-8650 (JP); Nishikawa, Masumi c/o AISIN SEIKI KABUSHIKI KAISHA, Kariya-shi, Aichi-ken, 448-8650 (JP)
(74) Representative: Winter, Brandl, Fürniss, Hübner, Röss, Kaiser, Polte - Partnerschaft

(56) References cited:
- EP-A1- 2 325 035
- DE-A1- 10 307 632
- DE-C- 397 239
- DE-T2-602004 007 338

## Description

### TECHNICAL FIELD

This disclosure relates to a movable grille shutter for a vehicle, according to the preamble of the patent claim 1.

### BACKGROUND DISCUSSION

According to a known movable grille shutter for a vehicle, in order to prevent poor combustion caused by an overcooled radiator within an engine room, a grille opening portion through which ambient air is taken in is operated to be opened or closed. For example, such grille shutter includes a plurality of fins provided at a base frame at a supporting shaft thereof so as to be freely rotatable in such a way that the fins are connected to each other by an interlocking arm, and the interlocking arm is connected to a link mechanism that is configured by a driving arm, formed so as to include a long through hole, and a pin arranged so as to be inserted into the long through hole. In this configuration, the driving arm is rotated by a driving source such as an actuator in order to operate the fins so as to open or close the grille opening portion (for example a movable grille shutter disclosed in JP58-139519U).

According to the known grille shutter disclosed in JP58-139519U, because the fins are rotated to open or close the grille opening portion in a manner where the fins follows a locus in the same direction, a distance between each of the supporting shaft of the fins is set to be wider. Further, in order to operate the fins by means of a single driving source, the fins need to be operated via a link mechanism and an area occupied by the operation such as a slide movement of the link mechanism may be wider. Furthermore, because the link mechanism has a complex structure, an efficiency of the force transmission may be lowered, accordingly the efficiency can not be easily estimated. In this configuration, an actuating device that may achieve a sufficient output needed for the sake of safety.

Reference EP 2 325 035 A1, the patent application being published after the priority date of the present patent, discloses a moveable grille shutter of the kind comprising an electric motor generating a rotational force which is directly transmitted to a main moveable member via a corresponding first rotating shaft. The force, which is generated by the electric motor and is transmitted through a transmission system, is also transmitted to a second rotating shaft via a gear, so that a driven member connected to the second rotating shaft is simultaneously rotated together with the main moveable member. The gear is arranged at the free ends of the first and second rotating shafts.

This means, that the EP 2 325 035 A1 discloses a so-called serial drive according to which the electric motor is operationally connected directly to only one rotating shaft of the main moveable member wherein the one rotating shaft of the main moveable member is operationally connected to the other rotating shaft of the driven member via the gear.

A generic moveable grille shutter for a vehicle is known from DE 60 2004 007 338 T2.

It is an object of the present invention to provide a movable grille shutter for a vehicle, by which an area occupied by an operation of the grille shutter may be reduced compared to a grille shutter at which a link mechanism is used, thereby achieving a downsize of the grille shutter.

### SUMMARY

This object is solved by a moveable grille shutter according to the patent claim 1. Basically, a movable grille shutter for a vehicle includes a first fin adapted to be provided at a grille opening portion through which ambient air is taken in, a second fin adapted to be provided at the grille opening portion and be arranged so as to be parallel to the first fin, and an actuating device for actuating the first fin and the second fin so as to open or close the grille opening portion, the actuating device having a first output shaft arranged on a rotational axis of the first fin, a second output shaft arranged on a rotational axis of the second fin so as to rotate in a direction opposite to a rotation of the first output shaft, and a driving source for supplying a driving force to the first output shaft and the second output shaft .

Thus, the first output shaft is arranged on the first rotational shaft of the first fin, and the second output shaft rotated in the direction opposite to the rotation of the first output shaft is arrange at the second rotational shaft of the second fin. Thus, the first fin and the second fin may be directly attached to the actuating portion; accordingly, compared to a case in which a link mechanism is used, an area in which the components are moved in accordance with an slide movement of the link mechanism does not need to be considered. Further, in this configuration, a level of mountability of the grille shutter may be increased. Further, because the link mechanism is not provided, a number of components may be reduced. Furthermore, because the driving force of the driving device is transmitted to the fins by means of the gears, not using the link mechanism that may be formed in a complicated structure, an efficiency of the force transmission may be improved, accordingly the efficiency of the force transmission can be easily estimated. In this configuration, the driving device may be downsized by optimizing (e.g., minimizing) the output of the driving device. Furthermore, the first fin, the second fin and the actuating portion may be combined so as to form an assembly, the assembly is attached to the base frame, thereby improving mountability to the vehicle.

According to another aspect of this disclosure, the first fin and the second fin are simultaneously moved in such a way that one end of the first fin follows a first locus and one end of the second fin follows a second locus that is symmetrical to the first locus, and when the first fin and the second fin are actuated so as to fully-open the grille opening portion, the first fin and the second fin are arranged in such a way that the first fin faces the second fin.

Thus, because the first fin and the second fin are operated so as to rotate symmetrically in the vertical direction of the vehicle, the area defined by the locus determined by the top end of the first fin and the locus determined by the top end of the second fin may be reduced, and in a case where the first fin and the second fin are rotated so as to fully open the grille opening portion and are arranged so as to face each other, an area occupied by the first fin and the second fin may be reduced, thereby the level of mountability may be increased. Further, because the first rotational shaft may be arranged in the vicinity of the second rotational shaft, a level of processing accuracy of portions to which the shafts are attached may be increased, thereby improving the mountability.

According to further aspect of this disclosure, the first output shaft includes a first gear, and the second output shaft includes a second gear that is meshing with the first gear.

Thus, because the first output shaft is operated simultaneously with the second output shaft in a structure where the first gear is meshing with the second output gear, the first fin and the second fin are firmly operated in synchronization with each other so as to open or close the grille opening portion.

According to yet another aspect of this disclosure, the driving force from the driving source is transmitted to the first output shaft, and the driving force transmitted to the first output shaft is further transmitted to the second output shaft.

Thus, because the driving force of the driving device is transmitted to the second output gear via the first gear, the second output shaft may be rotated in a direction that is opposite to the rotation of the first output shaft without providing an idler gear or the like, accordingly the force transmitting path may be simplified.

According to an aspect of this disclosure, the movable grille shutter for the vehicle further includes two of the first fins and two of the second fins, wherein one of the first fins is arranged on an axis of the first output shaft on one side of the actuating device in an axial direction of the first output shaft, the other of the first fins is arranged on the axis of the first output shaft on the other side of the actuating device in the axial direction of the first output shaft, one of the second fins is arranged on an axis of the second output shaft on one side of the actuating device in an axial direction of the second output shaft, and the other of the second fins is arranged on the axis of the second output shaft on the other side of the actuating device in the axial direction of the second output shaft.

Thus, the grille shutter is configured by the two first fins and the two second fins, and one of the first fins and one of the second fins are provided at the right of the actuating portion , and the other of the first fins and the other of the second fins are provided at the left of the actuating portion. In this structure, the width of each of the first fin and the second fin may be set so as to correspond to a width of the grille opening portion, and levels of distortions on the first fin and the second fin caused by a load of wind pressure applied thereto may be reduced, thereby firmly operating the first fins and the second fins so as to open or close the grille opening portion. Further, in this structure, the first fin and the second fin provided at the right of the actuating portion and the first fin and the second fin provided at the left of the actuating portion may be operated by means of a single component (the actuating portion).

According to another aspect of this disclosure, a first recessed portion having two flat surfaces being parallel to each other is formed at an end of the first gear, a second recessed portion having two flat surfaces being parallel to each other is formed at an end of the second gear, a first protruding portion having two flat surfaces being parallel to each other is formed at an end portion of the first fin, and a second protruding portion having two flat surfaces being parallel to each other is formed at an end portion of the second fin, and wherein the first fin is attached to the first gear so as to be integrally rotatably in a manner where the first recessed portion is fitted to the first protruding portion, and the second fin is attached to the second gear so as to be integrally rotatably in a manner where the second recessed portion is fitted to the second protruding portion.

According to further aspect of this disclosure, the grille opening portion includes a first opening portion adapted to be opened or closed by the first fin and a second opening portion adapted to be opened or closed by the second fin.

According to yet another aspect of this disclosure, the first opening portion and the second opening portion are arranged in a vertical direction of the vehicle.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a side cross-sectional view of an engine room indicating an entire configuration of a grille shutter related to a first embodiment of this disclosure;

Fig. 2 is an exploded perspective view indicating an entire configuration of the grille shutter related to the embodiment of this disclosure; and

Fig. 3 is an explanation diagram for an inner configuration of an actuator related to the embodiment of this disclosure.

### DETAILED DESCRIPTION

An embodiment of this disclosure will be explained.

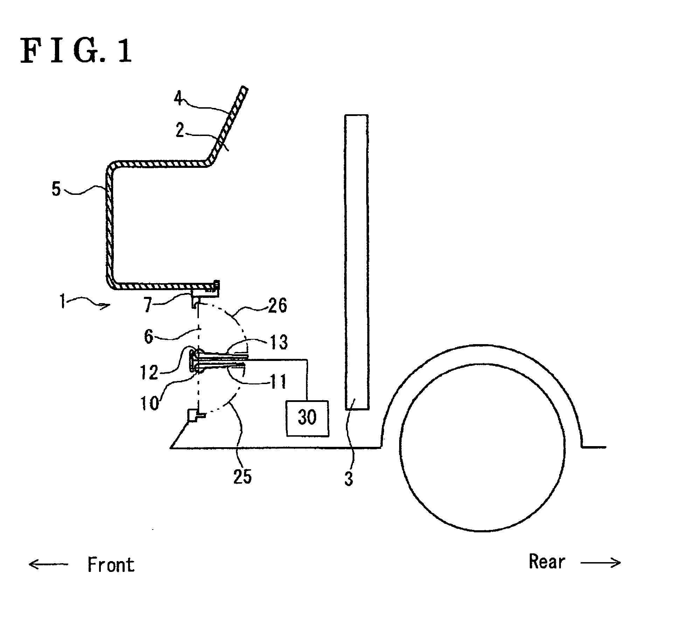

Fig. 1 is a side cross-sectional view of an engine room 2 indicating an entire configuration of a grille shutter 1 related to an embodiment of this disclosure. In the engine room 2, a radiator 3 for cooling an engine coolant is arranged so as to be attached to a vehicle body 4. At a lower front of the radiator 3 in a vehicle front-rear direction, a grille opening portion 6 is formed. At the grille opening portion 6, a base frame 7 is provided, and a first fin 11 is attached to the base frame 7 so as to be rotatable relative to a first rotational shaft 10 serving a rotational axis of the first fin 11, and a second fin 13 is attached to the base frame 7 so as to be rotatable relative to a second rotational shaft 12 provided in the vicinity of the first rotational shaft 10, the second rotational shaft 12 serving as a rotational axis of the second fin 13. The first fin 11 and the second fin 13 are operated so as to rotate symmetrically in a vertical direction of the vehicle.

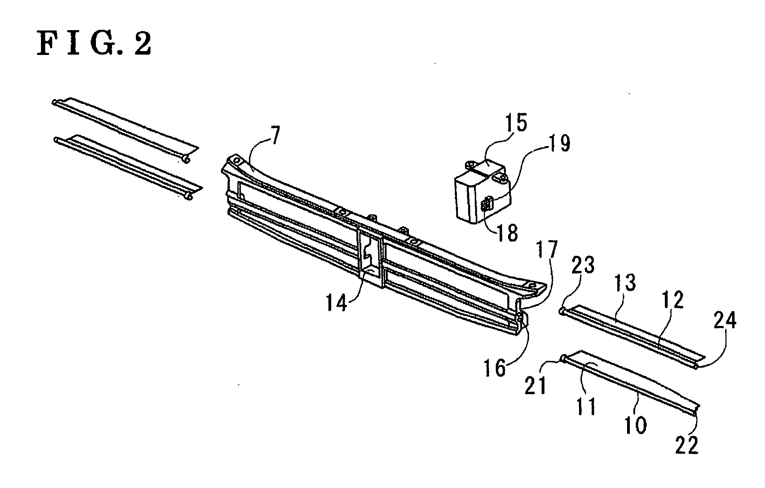

Fig. 2 is an exploded perspective view of an entire configuration of the grille shutter 1 related to the embodiment of this disclosure. As illustrated in Fig. 2, an actuator attaching portion 14 is provided at an intermediate portion of the base frame 7, and an actuator 15 (e.g., an actuating device) is attached to the base frame 7 at the actuator attaching portion 14 so as to be integral thereto. A first pair of the first and second fins 11 and 13 is provided at the right side of the base frame 7, and a second pair of the first and second fins 11 and 13 is also provided at the left side of the base frame 7. Because the first pair of the fins provided at the left side of the base frame 7 is provided in a similar manner as that of the second pair of fins provided at the right side of the base frame 7, an explanation of the configurations of the fins provided at the left side of the base frame 7 will be omitted, and only the configurations of the fins provided at the right side of the base frame 7 will be explained below. The base frame 7 is formed so as to include a first fin shaft supporting portion 16 and a second fin shaft supporting portion 17 at a right end portion of the base frame 7 in a width direction thereof. A first output shaft 18 and a second output shaft 19 are provided at the actuator 15. A first end portion 21 of the first fin 11 is connected to and supported by the first output shaft 18, and a second end portion 22 of the first fin 11 is supported by the first fin shaft supporting portion 16. In a similar manner, a first end portion 23 of the second fin 13 is connected to and supported by the second output shaft 19, and a second end portion 24 of the second fin 13 is supported by the second fin shaft supporting portion 17.

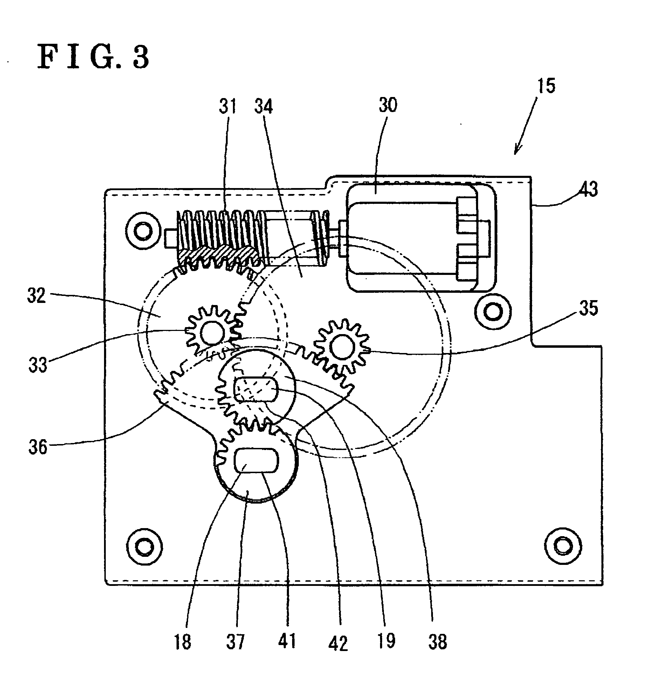

Fig. 3 is an explanation diagram for an inner configuration of the actuator 15 related to the embodiment of this disclosure. A worm gear 31 is provided at an output shaft of a motor 30 (e.g., a driving source), and the worm gear 31 is meshing with a worm wheel 32. The worm wheel 32 and a first pinion gear 33 are integrally and coaxially formed, and the first pinion gear 33 is meshing with the gear 34. The gear 34 is formed integrally and coaxially with a second pinion gear 35, and the second pinion gear 35 is meshing with a sector gear 36 being rotatable relative to the first output shaft 18. The sector gear 36 is formed so as to be coaxially and integrally with a first output gear 37 (e.g., a first gear), and the first output gear 37 is meshing with a second output gear 38 (e.g., a second gear) being rotatable relative to the second output shaft 19. On each of end surfaces of the first output gear 37 in an axial direction thereof, a first recessed portion 41, having two flat surfaces being parallel to each other, is formed. Further, a first protruding portion, having two flat surfaces being parallel to each other, is formed at the first end portion 21 of the first fin 11. In this configuration, the first fin 11 is supported by the actuator 15 in such a way that the protruding portion formed at the first end portion 21 of the first fin 11 is fitted to the first recessed portion 41 of the first output gear 37, so that the first fin 11 is integrally rotatable with the first output gear 37. Two of the second output gears 38 are provided in such a way that the worm wheel 32, the gear 34 and the sector gear 36 are sandwiched therebetween in the axial direction thereof, and a second recessed portion 42, having two flat surfaces being parallel to each other, is formed on a surface of each of the second output gear 38, and a second protruding portion, having two flat surfaces being parallel to each other, is formed at the first end portion 23 of the second fin 13. In this configuration, the second fin 13 is supported by the actuator 15 in such a way that the protruding portion formed at the first end portion 23 of the second fin 13 is fit to the second recessed portion 42 of the second output gear 38, so that the second fin 13 is integrally rotatable with the second output gear 38. The motor 30, the worm gear 31, the worm wheel 32, the first pinion gear 33, the gear 34, the second pinion gear 35, the sector gear 36, the first output gear 37 and the second output gear 38 are housed in the housing 43, thereby configuration the actuator 15.

A driving force generated at the motor 30 is transmitted to the first output gear 37 via the worm gear 31, the worm wheel 32, the first pinion gear 33, the gear 34, the second pinion gear 35 and the sector gear 36, thereby rotating the first output gear 37. The driving force transmitted to the sector gear 36 is further transmitted to the second output gear 38 via the first output gear 37, thereby rotating the second output gear 38 in a direction opposite to the rotation of the first output gear 37. Once the first and second output gears 37 and 38 are rotated, the first and second output shafts 18 and 19 are rotated, accordingly, the driving force generated at the motor 30 is eventually supplied to the first output shaft 18 and the second output shaft 19. Once the first and second output shafts 18 and 19 are rotated, the first fin 11 and the second fin 13 are operated in synchronization with each other so as to open or close the grille opening portion 6 in a manner where a top end of the first fin 11 follows a locus 25 (e.g., a first locus) that is symmetrical to a locus 26 (e.g., a second locus) determined by a top end of the second fin 13. When the first fin 11 and the second fin 13 are operated so as to fully open the grille opening portion, the first fin 11 is positioned so as to face the second fin 13.

According to the embodiment, the first output shaft 18 is arranged on the first rotational shaft 10 of the first fin 11, and the second output shaft 19 rotated in the direction opposite to the rotation of the first output shaft 18 is arrange at the second rotational shaft 12 of the second fin 13. Thus, the first fin 11 and the second fin 13 may be directly attached to the actuator 15, accordingly, compared to a case in which a link mechanism is used, an area in which the components are moved in accordance with an slide movement of the link mechanism does not need to be considered. Further, in this configuration, a level of mountability of the grille shutter may be increased. Further, because the link mechanism is not provided, a number of components may be reduced. Furthermore, because the driving force of the motor is transmitted to the fins by means of the gears, not using the link mechanism that may be formed in a complicated structure, an efficiency of the force transmission may be improved; accordingly the efficiency of the force transmission can be easily estimated. In this configuration, the motor 30 may be downsized by optimizing (e.g., minimizing) the output of the motor 30. Furthermore, the first fin 11, the second fin 13 and the actuator 15 may be combined so as to form an assembly, the assembly is attached to the base frame 7, thereby improving mountability to the vehicle.

According to the embodiment, because the first fin 11 and the second fin 13 are operated so as to rotate symmetrically in the vertical direction of the vehicle, the area defined by the locus 25 determined by the top end of the first fin 11 and the locus 26 determined by the top end of the second fin 13 may be reduced, and in a case where the first fin 11 and the second fin 13 are rotated so as to fully open the grille opening portion 6 and are arranged so as to face each other, an area occupied by the first fin 11 and the second fin 13 may be reduced, thereby the level of mountability may be increased. Further, because the first rotational shaft 10 may be arranged in the vicinity of the second rotational shaft 12, a level of processing accuracy of portions to which the shafts are attached may be increased, thereby improving the mountability.

According to the embodiment, because the first output shaft 18 is operated simultaneously with the second output shaft 19 in a structure where the first output gear 37 is meshing with the second output gear 38, the first fin 11 and the second fin 13 are firmly operated in synchronization with each other so as to open or close the grille opening portion 6.

According to the embodiment, because the driving force of the motor is transmitted to the second output gear 38 via the first output gear 37, the second output shaft 19 may be rotated in a direction that is opposite to the rotation of the first output shaft 18 without providing an idler gear or the like, accordingly the force transmitting path may be simplified.

According to the embodiment, the grille shutter 1 is configured by the two first fins 11 and the two second fins 13, and one of the first fins 11 and one of the second fins 13 are provided at the right of the actuator 15, and the other of the first fins 11 and the other of the second fins 13 are provided at the left of the actuator 15. In this structure, the width of each of the first fin 11 and the second fin 13 may be set so as to correspond to a width of the grille opening portion 6, and levels of distortions on the first fin 11 and the second fin 13 caused by a load of wind pressure applied thereto may be reduced, thereby firmly operating the first fins 11 and the second fins 13 so as to open or close the grille opening portion 6. Further, in this structure, the first fin 11 and the second fin 13 provided at the right of the actuator 15 and the first fin 11 and the second fin 13 provided at the left of the actuator 15 may be operated by means of a single component (the actuator 15).

According to the embodiment of this disclosure, an interlocking mechanism is provided at each of the first output shaft 18 and the second output shaft 19, however, the interlocking mechanism may be provided at each of the first rotational shaft 10 and the second rotational shaft 12. Further, the first rotational shaft 10 is arranged so as to be parallel to the second rotational shaft 12, however, the first rotational shaft 10 may be arranged so as to have an angle relative to the second rotational shaft 12 if there is a limitation related to mountability or a limitation related to an exterior design. A planetary gear mechanism may be used for the interlocking mechanism provided at each of the first output shaft 18 and the second output shaft 19, thereby arranging the first rotational shaft 10 so as to be coaxial with the second rotational shaft 12. A coaxial type speed reducing mechanism including a harmonic drive gear or a planetary gear train may be used as the speed reducing mechanism. In this configuration, the motor may be arranged coaxially with the first output shaft 18. The size of the first fin 11 provided at the right of the actuator 15 may be different from the size of the first fin 11 provided at the left of the actuator 15, and the size of the second fin 13 provided at the right of the actuator 15 may be different from the size of the second fin 13 provided at the left of the actuator 15. In a case where an entire width of the grille opening portion 6 is narrow, the actuator 15 may be positioned at a right end or a left end of the grille opening portion 6, and one first fin 11 and one second fin 13 may be provided.

According to the embodiment of this disclosure, the driving force from the motor 30 is transmitted to the second output gear 38 via the first output gear 37, and the driving force transmitted to the second output gear 38 is eventually supplied to the first and second output shafts 18 and 19, however, the driving force generated at the motor 30 may be directly transmitted to each of the first and second output shafts 18 and 19.

According to the embodiment of this disclosure, the movable grille shutter for the vehicle includes a first fin 11 adapted to be provided at a grille opening portion 6 through which ambient air is taken in, a second fin 13 adapted to be provided at the grille opening portion 6 and be arranged so as to be parallel to the first fin 11, a first output shaft 18 arranged on a rotational axis of the first fin 11, a second output shaft 19 arranged on a rotational axis of the second fin 13 so as to rotate in a direction opposite to a rotation of the first output shaft 18, a driving source 30 for supplying a driving force to the first output shaft 18 and the second output shaft 19 and an actuator 15 for actuating the first fin 11 and the second fin 13 so as to open or close the grille opening portion 6.

Thus, the first output shaft 18 is arranged on the first rotational shaft 10 of the first fin 11, and the second output shaft 19 rotated in the direction opposite to the rotation of the first output shaft 18 is arrange at the second rotational shaft 12 of the second fin 13. Thus, the first fin 11 and the second fin 13 may be directly attached to the actuator 15, accordingly, compared to a case in which a link mechanism is used, an area in which the components are moved in accordance with an slide movement of the link mechanism does not need to be considered. Further, in this configuration, a level of mountability of the grille shutter may be increased. Further, because the link mechanism is not provided, a number of components may be reduced. Furthermore, because the driving force of the motor is transmitted to the fins by means of the gears, not using the link mechanism that may be formed in a complicated structure, an efficiency of the force transmission may be improved, accordingly the efficiency of the force transmission can be easily estimated. In this configuration, the motor 30 may be downsized by optimizing (e.g., minimizing) the output of the motor 30. Furthermore, the first fin 11, the second fin 13 and the actuator 15 may be combined so as to form an assembly, the assembly is attached to the base frame 7, thereby improving mountability to the vehicle.

According to the embodiment of this disclosure, the first fin 11 and the second fin 13 are simultaneously moved in such a way that one end of the first fin 11 follows a first locus 25 and one end of the second fin 13 follows a second locus 26 that is symmetrical to the first locus 25, and when the first fin 11 and the second fin 13 are actuated so as to fully-open the grille opening portion 6, the first fin 11 and the second fin 13 are arranged in such a way that the first fin 11 faces the second fin 13.

According to the embodiment, because the first fin 11 and the second fin 13 are operated so as to rotate symmetrically in the vertical direction of the vehicle, the area defined by the locus 25 determined by the top end of the first fin 11 and the locus 26 determined by the top end of the second fin 13 may be reduced, and in a case where the first fin 11 and the second fin 13 are rotated so as to fully open the grille opening portion 6 and are arranged so as to face each other, an area occupied by the first fin 11 and the second fin 13 may be reduced, thereby the level of mountability may be increased. Further, because the first rotational shaft 10 may be arranged in the vicinity of the second rotational shaft 12, a level of processing accuracy of portions to which the shafts are attached may be increased, thereby improving the mountability.

According to the embodiment of this disclosure, the first output shaft 18 includes a first output gear 37, and the second output shaft 19 includes a second output gear 38 that is meshing with the first output gear 37.

According to the embodiment, because the first output shaft 18 is operated simultaneously with the second output shaft 19 in a structure where the first output gear 37 is meshing with the second output gear 38, the first fin 11 and the second fin 13 are firmly operated in synchronization with each other so as to open or close the grille opening portion 6.

According to the embodiment of this disclosure, the driving force from the motor 30 is transmitted to the first output shaft 18, and the driving force transmitted to the first output shaft 18 is further transmitted to the second output shaft 19.

According to the embodiment, because the driving force of the motor is transmitted to the second output gear 38 via the first output gear 37, the second output shaft 19 may be rotated in a direction that is opposite to the rotation of the first output shaft 18 without providing an idler gear or the like, accordingly the force transmitting path may be simplified.

According to the embodiment of this disclosure, the movable grille shutter further includes two of the first fins 11 and two of the second fins 13, wherein one of the first fins 11 is arranged on an axis of the first output shaft 18 on one side of the actuator 15 in an axial direction of the first output shaft 18, the other of the first fins 11 is arranged on the axis of the first output shaft 18 on the other side of the actuating device 15 in the axial direction of the first output shaft 18, one of the second fins 13 is arranged on an axis of the second output shaft 19 on one side of the actuating device 15 in an axial direction of the second output shaft 19, and the other of the second fins 13 is arranged on the axis of the second output shaft 19 on the other side of the actuating device 15 in the axial direction of the second output shaft 19.

According to the embodiment, the grille shutter 1 is configured by the two first fins 11 and the two second fins 13, and one of the first fins 11 and one of the second fins 13 are provided at the right of the actuator 15, and the other of the first fins 11 and the other of the second fins 13 are provided at the left of the actuator 15. In this structure, the width of each of the first fin 11 and the second fin 13 may be set so as to correspond to a width of the grille opening portion 6, and levels of distortions on the first fin 11 and the second fin 13 caused by a load of wind pressure applied thereto may be reduced, thereby firmly operating the first fins 11 and the second fins 13 so as to open or close the grille opening portion 6. Further, in this structure, the first fin 11 and the second fin 13 provided at the right of the actuator 15 and the first fin 11 and the second fin 13 provided at the left of the actuator 15 may be operated by means of a single component (the actuator 15).

According to the embodiment of this disclosure, a first recessed portion 41 having two flat surfaces being parallel to each other is formed at an end of the first output gear 37, a second recessed portion 42 having two flat surfaces being parallel to each other is formed at an end of the second output gear 38, a first protruding portion having two flat surfaces being parallel to each other is formed at an first end portion 21 of the first fin 11, and a second protruding portion having two flat surfaces being parallel to each other is formed at an second end portion 23 of the second fin 13, and wherein the first fin 11 is attached to the first output gear 37 so as to be integrally rotatably in a manner where the first recessed portion 41 is fitted to the first protruding portion, and the second fin 13 is attached to the second output gear 38 so as to be integrally rotatably in a manner where the second recessed portion 42 is fitted to the second protruding portion.

According to the embodiment of this disclosure, the grille opening portion 6 includes a first opening portion adapted to be opened or closed by the first fin 11 and a second opening portion adapted to be opened or closed by the second fin 13.

According to the embodiment of this disclosure, the first opening portion and the second opening portion are arranged in a vertical direction of the vehicle.

## Claims

1. A moveable grille shutter for a vehicle comprising:
a first fin (11) having a first rotational shaft (10) and adapted to be provided at a grille opening portion (6) through which ambient air is taken in;
a second fin (13) having a second rotational shaft (12) and adapted to be provided at the grille opening portion (6) and be arranged so as to be parallel to said first fin (11); and
an actuating device (15) for actuating said first fin (11) and said second fin (13) so as to open or close the grille opening portion (6),
said actuating device (15) includes a drive source (30) applying a driving force to a first output shaft (18) arranged on a rotational axis of said first fin (11) and to a second output shaft (19) arranged on a rotational axis of said second fin (13) by means of gears (31, 32, 33, 34, 35, 36, 37, 38), respectively, **characterized in that** the driving force is applied such that said second output shaft (19) rotates in a direction opposite to a rotation of said first output shaft (18), and the moveable grille shutter further being
**characterized in that**
said drive source (30) and said gears (31, 32, 33, 34, 35, 36, 37, 38) are housed in a common housing (43), thereby configuring said actuating device (15) at which the first output shaft (18) and the second output shaft (19) are provided,
to which a first end portion (21) of the first rotational shaft (10) of said first fin (11) and a first end portion (23) of the second rotational shaft (12) of the second fin (13) are connected, respectively.

2. The movable grille shutter for the vehicle according to Claim 1, **characterized in that** the first fin (11) and the second fin (13) are simultaneously moved in such a way that one end of the first fin (11) follows a first locus (25) and one end of the second fin (13) follows a second locus (26) that is symmetrical to the first locus (25), and when the first fin (11) and the second fin (13) are actuated so as to fully-open the grille opening portion (6), the first fin (11) and the second fin (13) are arranged in such a way that the first fin (11) faces the second fin (13).

3. The movable grille shutter for the vehicle according to Claim 1 or 2, **characterized in that** the first output shaft (18) includes a first gear (37), and the second output shaft (19) includes a second gear (38) that is meshing with the first gear.

4. The movable grille shutter for the vehicle according to any one of Claims 1 through 3, **characterized in that** the driving force from the driving source (30) is transmitted to the first output shaft (18), and the driving force transmitted to the first output shaft (18) is further transmitted to the second output shaft (19).

5. The movable grille shutter for the vehicle according to any one of Claims 1 through 4 including two of the first fins (11) and two of the second fins (13), wherein one of the first fins (11) is arranged on an axis of the first output shaft (18) on one side of the actuating device (15) in an axial direction of the first output shaft (18), the other of the first fins (11) is arranged on the axis of the first output shaft (18) on the other side of the actuating device (15) in the axial direction of the first output shaft (18), one of the second fins (13) is arranged on an axis of the second output shaft (19) on one side of the actuating device (15) in an axial direction of the second output shaft (19), and the other of the second fins (13) is arranged on the axis of the second output shaft (19) on the other side of the actuating device (15) in the axial direction of the second output shaft (19).

6. The movable grille shutter for the vehicle according to Claim 3, **characterized in that** a first recessed portion (41) having two flat surfaces being parallel to each other is formed at an end of the first gear (37), a second recessed portion (42) having two flat surfaces being parallel to each other is formed at an end of the second gear (38), a first protruding portion having two flat surfaces being parallel to each other is formed at the first end portion (21) of the first fin (11), and a second protruding portion having two flat surfaces being parallel to each other is formed at the first end portion (23) of the second fin (13), and wherein the first fin (11) is attached to the first gear (37) so as to be integrally rotatably in a manner where the first recessed portion (41) is fitted to the first protruding portion, and the second fin (13) is attached to the second gear (38) so as to be integrally rotatably in a manner where the second recessed portion (42) is fitted to the second protruding portion.

7. The movable grille shutter for the vehicle according to Claim 1, **characterized in that** the grille opening portion (6) includes a first opening portion adapted to be opened or closed by the first fin (11) and a second opening portion adapted to be opened or closed by the second fin (13).

8. The movable grille shutter for the vehicle according to Claim 7, **characterized in that** the first opening portion and the second opening portion are arranged in a vertical direction of the vehicle.

## Patentansprüche

1. Bewegliche Grillblende für ein Fahrzeug mit:
einem ersten Flügel (11), der eine erste drehende Welle (10) aufweist und angepasst ist, an einem Grillöffnungsabschnitt (6) bereitgestellt zu sein, durch den Umgebungsluft hineingenommen wird,
einem zweiten Flügel (13), der eine zweite drehende Welle (12) aufweist und angepasst ist, an dem Grillöffnungsabschnitt (6) bereitgestellt zu sein und angeordnet ist, um parallel zu dem ersten Flügel (11) zu liegen; und
einem Betätigungsgerät (15) zum Betätigen des ersten Flügels (11) und des zweiten Flügels (13), um den Grillöffnungsabschnitt (6) zu öffnen oder zu schließen,
wobei das Betätigungsgerät (15) eine Antriebsquelle (30) hat, die eine Antriebskraft auf eine an einer Drehachse des ersten Flügels (11) angeordnete erste Abtriebswelle (18) und auf eine an einer Drehachse des zweiten Flügels (13) angeordnete zweite Abtriebswelle (19) mittels Zahnrädern (31, 32, 33, 34, 35, 36, 37, 38) entsprechend aufbringt,
**dadurch gekennzeichnet, dass**
die Antriebskraft derart aufgebracht wird, dass die zweite Abtriebswelle (19) in eine Richtung entgegengesetzt zu einer Drehung der ersten Abtriebswelle (18) dreht, und
die bewegliche Grillblende außerdem
**dadurch gekennzeichnet ist, dass**
die Antriebsquelle (30) und die Zahnräder (31, 32, 33, 34, 35, 36, 37, 38) in einem gemeinsamen Gehäuse (43) aufgenommen sind, und dabei das Betätigungsgerät (15) konfigurieren, an dem die erste Abtriebswelle (18) und die zweite Abtriebswelle (19) bereitgestellt sind,
mit dem ein erster Endabschnitt (21) der ersten drehenden Welle (10) des ersten Flügels (11) bzw. ein erster Endabschnitt (23) der zweiten drehenden Welle (12) des zweiten Flügels (13) verbunden sind.

2. Bewegliche Grillblende für das Fahrzeug nach Anspruch 1, **dadurch gekennzeichnet, dass** der erste Flügel (11) und der zweite Flügel (13) gleichzeitig in einer derartigen Weise bewegt werden, dass ein Ende des ersten Flügels (11) einer ersten Bahn (25) folgt, und ein erstes Ende des zweiten Flügels (13) einer zweiten Bahn (26) folgt, die symmetrisch zu der ersten Bahn (25) ist, und wenn der erste Flügel (11) und der zweite Flügel (13) betätigt werden, um den Grillöffnungsabschnitt (6) vollständig zu öffnen, der erste Flügel (11) und der zweite Flügel (13) in einer derartigen Weise angeordnet sind, dass der erste Flügel (11) zu dem zweiten Flügel (13) gerichtet ist.

3. Bewegliche Grillblende für das Fahrzeug nach Anspruch 1 oder 2, **dadurch gekennzeichnet, dass** die erste Abtriebswelle (18) ein erstes Zahnrad (37) hat, und die zweite Abtriebswelle (19) ein zweites Zahnrad (38) hat, das mit dem ersten Zahnrad (37) in Kämmeingriff ist.

4. Bewegliche Grillblende für das Fahrzeug nach einem der Ansprüche 1 bis 3, **dadurch gekennzeichnet, dass** die Antriebskraft von der Antriebsquelle (30) zu der ersten Abtriebswelle (18) übertragen wird, und die zu der ersten Abtriebswelle (18) übertragene Antriebskraft weiter zu der zweiten Abtriebswelle (19) übertragen wird.

5. Bewegliche Grillblende für das Fahrzeug nach einem der Ansprüche 1 bis 4 mit zwei der ersten Flügel (11) und zwei der zweiten Flügel (13), wobei eine der ersten Flügel (11) an einer Achse der ersten Abtriebswelle (18) an einer Seite des Betätigungsgeräts (15) in einer axialen Richtung der ersten Abtriebswelle (18) angeordnet ist, und die andere der ersten Flügel (11) an der Achse der ersten Abtriebswelle (18) an der anderen Seite des Betätigungsgeräts (15) in der axialen Richtung der ersten Abtriebswelle (18) angeordnet ist, eine der zweiten Flügel (13) an einer Achse der zweiten Abtriebswelle (19) an einer Seite des Betätigungsgeräts (15) in einer axialen Richtung der zweiten Abtriebswelle (19) angeordnet ist, und die andere der zweiten Flügel (13) an der Achse der zweiten Abtriebswelle (19) an der anderen Seite des Betätigungsgeräts (15) in der axialen Richtung der zweiten Abtriebswelle (19) angeordnet ist.

6. Bewegliche Grillblende für das Fahrzeug nach Anspruch 3, **dadurch gekennzeichnet, dass** ein erster ausgesparter Abschnitt (41), der zwei parallel zueinander liegende flache Oberflächen aufweist, an einem Ende des ersten Zahnrads (37) ausgebildet ist, ein zweiter ausgesparter Abschnitt (42), der zwei parallel zueinander liegende flache Oberflächen aufweist, an einem Ende des zweiten Zahnrads (38) ausgebildet ist, ein erster vorspringender Abschnitt, der zwei flache zueinander parallel liegende Oberflächen aufweist, an dem ersten Endabschnitt (21) des ersten Flügels (11) ausgebildet ist, und ein zweiter vorspringender Abschnitt, der zwei flache zueinander parallel liegende Oberflächen aufweist, an dem ersten Endabschnitt (23) des zweiten Flügels (13) ausgebildet ist, und wobei der erste Flügel (11) an dem ersten Zahnrad (37) angebracht ist, um mit diesem zusammen in einer Weise drehbar zu sein, in der der erste ausgesparte Abschnitt (41) an den ersten vorspringenden Abschnitt gepasst ist, und der zweite Flügel (13) an dem zweiten Zahnrad (38) in einer Weise angebracht ist, um mit diesem zusammen in einer Weise drehbar zu sein, in der der zweite ausgesparte Abschnitt (42) an den zweiten vorspringenden Abschnitt gepasst ist.

7. Bewegliche Grillblende für das Fahrzeug nach Anspruch 1, **dadurch gekennzeichnet, dass** der Grillöffnungsabschnitt (6) einen ersten Öffnungsabschnitt hat, der angepasst ist, durch den ersten Flügel (11) geöffnet oder geschlossen zu werden, und einen zweiten Öffnungsabschnitt hat, der angepasst ist, durch den zweiten Flügel (13) geöffnet oder geschlossen zu werden.

8. Bewegliche Grillblende für das Fahrzeug nach Anspruch 7, **dadurch gekennzeichnet, dass** der erste Öffnungsabschnitt und der zweite Öffnungsabschnitt in einer vertikalen Richtung des Fahrzeugs angeordnet sind.

## Revendications

1. Volet de calandre mobile destiné à un véhicule comprenant :
une première ailette (11) ayant un premier arbre rotatif (10) et adaptée pour être fournie au niveau d'une partie (6) d'ouverture de calandre à travers laquelle l'air ambiant est absorbé ;
une deuxième ailette (13) ayant un deuxième arbre rotatif (12) et adaptée pour être fournie au niveau de la partie (6) d'ouverture de calandre et pour être disposée de manière à être parallèle à ladite première ailette (11) ; et
un dispositif d'actionnement (15) destiné à actionner ladite première ailette (11) et ladite deuxième ailette (13) afin d'ouvrir ou fermer la partie (6) d'ouverture de calandre,
ledit dispositif d'actionnement (15) comporte une source d'entraînement (30) permettant d'appliquer une force motrice à un premier arbre de sortie (18) disposé sur un axe de rotation de ladite première ailette (11) et à un deuxième arbre de sortie (19) disposé sur un axe de rotation de ladite deuxième ailette (13) par l'intermédiaire d'engrenages (31, 32, 33, 34, 35, 36, 37, 38), respectivement, **caractérisé en ce que** la force motrice est appliquée de sorte que ledit deuxième arbre de sortie (19) tourne dans une direction opposée à la rotation dudit premier arbre de sortie (18), et le volet de calandre mobile étant en outre **caractérisé en ce que**
ladite source d'entraînement (30) et lesdits engrenages (31, 32, 33, 34, 35, 36, 37, 38) sont logés dans un boîtier commun (43), permettant de configurer ainsi ledit dispositif d'actionnement (15) au niveau duquel le premier arbre de sortie (18) et le deuxième arbre de sortie (19) sont fournis,
ce à quoi une première partie d'extrémité (21) du premier arbre rotatif (10) de ladite première ailette (11) et une première partie d'extrémité (23) du deuxième arbre rotatif (12) de la deuxième ailette (13) sont reliées, respectivement.

2. Volet de calandre mobile destiné au véhicule selon la revendication 1, **caractérisé en ce que** la première ailette (11) et la deuxième ailette (13) sont simultanément déplacées de manière à ce qu'une extrémité de la première ailette (11) suive un premier lieu (25) et une extrémité de la deuxième ailette (13) suive un deuxième lieu (26) qui est symétrique au premier lieu (25), et lorsque la première ailette (11) et la deuxième ailette (13) sont actionnées afin d'ouvrir complètement la partie (6) d'ouverture de calandre, la première ailette (11) et la deuxième ailette (13) sont disposées de sorte que la première ailette (11) soit en vis-à-vis avec la deuxième ailette (13).

3. Volet de calandre mobile destiné au véhicule selon la revendication 1 ou 2, **caractérisé en ce que** le premier arbre de sortie (18) comporte un premier engrenage (37), et le deuxième arbre de sortie (19) comporte un deuxième engrenage (38) qui s'engrène avec le premier engrenage.

4. Volet de calandre mobile destiné au véhicule selon l'une quelconque des revendications 1 à 3, **caractérisé en ce que** la force motrice de la source d'entraînement (30) est transmise au premier arbre de sortie (18), et la force motrice transmise au premier arbre de sortie (18) est en outre transmise au deuxième arbre de sortie (19).

5. Volet de calandre mobile destiné au véhicule selon l'une quelconque des revendications 1 à 4, comportant deux ailettes parmi les premières ailettes (11) et deux ailettes parmi les deuxièmes ailettes (13), où l'une des premières ailettes (11) est disposée sur un axe du premier arbre de sortie (18) sur un côté du dispositif d'actionnement (15) dans une direction axiale du premier arbre de sortie (18), l'autre ailette parmi les premières ailettes (11) est disposée sur l'axe du premier arbre de sortie (18) sur l'autre côté du dispositif d'actionnement (15) dans la direction axiale du premier arbre de sortie (18), l'une des deuxièmes ailettes (13) est disposée sur un axe du deuxième arbre de sortie (19) sur un côté du dispositif d'actionnement (15) dans une direction axiale du deuxième arbre de sortie (19), et l'autre ailette parmi les deuxièmes ailettes (13) est disposée sur l'axe du deuxième arbre de sortie (19) sur l'autre côté du dispositif d'actionnement (15) dans la direction axiale du deuxième arbre de sortie (19).

6. Volet de calandre mobile destiné au véhicule selon la revendication 3, **caractérisé en ce qu'**une première partie évidée (41) ayant deux surfaces plates étant parallèles l'une à l'autre est formée au niveau d'une extrémité du premier engrenage (37), une deuxième partie évidée (42) ayant deux surfaces plates étant parallèles l'une à l'autre est formée au niveau d'une extrémité du deuxième engrenage (38), une première partie en saillie ayant deux surfaces plates étant parallèles l'une à l'autre est formée au niveau de la première partie d'extrémité (21) de la première ailette (11), et une deuxième partie en saillie ayant deux surfaces plates étant parallèles l'une à l'autre est formée au niveau de la première partie d'extrémité (23) de la deuxième ailette (13), et où la première ailette (11) est fixée au premier engrenage (37) afin de pouvoir tourner intégralement de manière à ce que la première partie évidée (41) soit ajustée à la première partie en saillie, et la deuxième ailette (13) est fixée au deuxième engrenage (38) afin de pouvoir tourner intégralement de manière à ce que la deuxième partie évidée (42) soit ajustée à la deuxième partie en saillie.

7. Volet de calandre mobile destiné au véhicule selon la revendication 1, **caractérisé en ce que** la partie (6) d'ouverture de calandre comporte une première partie d'ouverture adaptée pour être ouverte ou fermée par la première ailette (11) et une deuxième partie d'ouverture adaptée pour être ouverte ou fermée par la deuxième ailette (13).

8. Volet de calandre mobile destiné au véhicule selon la revendication 7, **caractérisé en ce que** la première partie d'ouverture et la deuxième partie d'ouverture sont disposées dans une direction verticale du véhicule.
